# EUROPÄISCHE PATENTSCHRIFT

(11) **EP 1 943 509 B1**
(45) Veröffentlichungstag und Bekanntmachung des Hinweises auf die Patenterteilung: **13.01.2010**
(21) Anmeldenummer: 06805963.3
(22) Anmeldetag: 29.09.2006
(51) Int. Cl.: G01N 29/06

(54) **VERFAHREN UND VORRICHTUNG ZUR BILDGEBENDEN ULTRASCHALLPRÜFUNG AN EINE DREIDIMENSIONALEN WERKSTÜCK**
METHOD AND DEVICE FOR AN IMAGING ULTRASONIC INSPECTION OF A THREE-DIMENSIONAL WORKPIECE
PROCEDE ET DISPOSITIF POUR EXAMINER UNE PIECE A USINER TRIDIMENSIONNELLE, AUX ULTRASONS, PAR IMAGERIE

(30) Priorität: 28.10.2005 DE 102005051783
(43) Veröffentlichungstag der Anmeldung: 16.07.2008
(73) Patentinhaber: Fraunhofer-Gesellschaft zur Förderung der angewandten Forschung e.V., 80686 München (DE)
(72) Erfinder: VON BERNUS, Ludwig, 91575 Windsbach (DE); KRÖNING, Michael, 66123 Saarbrücken (DE); BOULAVINOV, Andrei, 66123 Saarbrücken (DE); REDDY, Krishna, Mohan c/o Andrey Bulavinov, 66123 Saarbrücken (DE)
(74) Vertreter: Rösler, Uwe
(86) Internationale Anmeldenummer: PCT/EP2006/009484
(87) Internationale Veröffentlichungsnummer: WO 2007/048479

(56) Entgegenhaltungen:
- DE-A1- 10 248 979
- US-A- 5 465 722
- US-A1- 2005 209 791
- US-B1- 6 238 346
- US-B1- 6 347 551
- VOS H C L ET AL: "An ultrasonic circular array transducer for pipeline and borehole inspection" 1988 ULTRASONICS SYMPOSIUM, 2. Oktober 1988 (1988-10-02), Seiten 659-662, XP010075531

## Beschreibung

### Technisches Gebiet

Die Erfindung bezieht sich auf ein Verfahren zur bildgebenden Ultraschallprüfung an einem dreidimensionalen Werkstück, bei dem mit einem oder einer Vielzahl von Ultraschallwandlern Ultraschallwellen in das Werkstück eingekoppelt und innerhalb des Werkstückes reflektierte Ultraschallwellen von einer Vielzahl Ultraschallwandlern empfangen und in Ultraschallsignale umgewandelt werden, die der zerstörungsfreien bildgebenden Ultraschallprüfung zugrunde gelegt werden.

### Stand der Technik

Die Vorgehensweise bei der zerstörungsfreien Untersuchung eines Prüfkörpers mittels Ultraschall, bspw. zu Zwecken der Materialprüfung hinsichtlich Materialfehler, wie Risse, Einschlüsse oder sonstiger Materialinhomogenitäten, umfasst die Einkoppelung von Ultraschallwellen in den Prüfkörper, die Detektion der durch den Prüfkörper transmittierten oder innerhalb des Prüfkörpers reflektierten, gebeugten, gestreuten und/oder gebrochenen Ultraschallwellen sowie der Auswertung der in Ultraschallsignale umgewandelten Ultraschallwellen.

Mit der vorstehenden, an sich bekannten Untersuchungsmethode ist es möglich die Durchschallungs-, bzw. die Reflexionseigenschaften für Ultraschallwellen eines Prüfkörpers zu erfassen und auszuwerten. So bilden sich bei diesem, ursprünglich aus der Medizintechnik (Ultraschalldiagnostik) stammenden Verfahren innerhalb eines Prüfkörpers befindliche Störstellen, wie Materialrisse, materialfremde Einlagerungen oder Materialgrenzen, durch entsprechende Auswertung der empfangenen Ultraschallsignale als Bereiche mit geänderten Reflexionseigenschaften ab. Lage, Form und Größe der Störstellen können in räumlich hoch aufgelöster Weise dreidimensional zur Darstellung gebracht werden.

Es liegt auf der Hand, dass die Anwendungsgebiete dieses Verfahren vielfältig sind. Beispielhaft seien die Anwendung des Verfahrens zur Prüfung und Erfassung von Homogenitäts- oder Festigkeitseigenschaften von Bauwerksteilen (Betonwände, Decken- oder Wandelemente, etc.) oder zur Rissprüfung bspw. bei Eisenbahnrädern oder Flugzeugteilen genannt.

In vielen Anwendungsfällen der zerstörungsfreien Materialprüfung mittels Ultraschall kommt eine Vielzahl von Ultraschallwandlern zum Einsatz, die für eine bessere Handhabung in einem so genannten Ultraschallprüfkopf oder Gruppenstrahler-Prüfkopf zusammengefasst werden. Grundsätzlich werden zwei Arten von Ultraschallprüfköpfen unterschieden. Von einem Impuls-Echo-Prüfkopf spricht man, wenn der Prüfkopf ein Ultraschallwellenpaket in den Prüfkörper einkoppelt und die im Prüfkörper reflektierten Ultraschallwellen wieder empfängt. Prüfköpfe mit getrennten Ultraschallwandlern zum Einkoppeln und Empfangen von Ultraschallwellen werden hingegen als Sende-Empfangs-Prüfköpfe bezeichnet.

In allen bisher bekannten Ultraschallprüfsystemen mit Schallfeldsteuerung werden die einzelnen Ultraschallwandler zeitlich koordiniert derart beaufschlagt, so dass die Ultraschallwandler unabhängig voneinander zeitgesteuert aktiviert werden können und bspw. als Ultraschallsender oder -empfänger dienen. Insbesondere ermöglicht eine derartige separate Ansteuerung die einzelnen Ultraschallwandler jeweils mit unterschiedlichen Phasenlage und Amplitude zu betreiben.

Unter Nutzung der so genannte Phased Array Technik vermögen Gruppenstrahlerprüfköpfe, in denen zur kontrollierten Ultraschallaussendung und -detektion eine Vielzahl einzelner Ultraschallwandler vorgesehen sind, Ultraschallwellen in einen Prüfkörper unter beliebigen Einschallwinkeln und in beliebig vorgebbaren Fokussierbereichen anzuregen und aus diesen Einschallbereichen zu empfangen. Zur Durchführung einer derartigen Messung, mit der das Durchschallungsvermögen eines Prüfkörpers untersucht werden soll, regt ein Steuergerät zumindest einen, meist jedoch mehrere Ultraschallwandler des Gruppenstrahlerprüfkopfes für ein begrenztes, kurzes Zeitintervall zur Einkoppelung von Ultraschallwellen in den Prüfkörper an. Die dabei entstehenden, eingekoppelten Ultraschallwellenpakete werden bspw. an Materialungänzen innerhalb des Prüfkörper reflektiert und gelangen als reflektierte Ultraschallwellen zu den nunmehr als Empfänger arbeitenden Ultraschallwandlern zurück, werden von diesen in Ultraschallsignale umgewandelt und an das Steuergerät zur Auswertung geleitet. Die Zeitspanne zwischen dem Beginn des Aussendevorganges und dem Ende des Empfangsvorgangs der Ultraschallsignale wird zumeist als Messtakt bezeichnet.

In vielen Anwendungsfällen gilt es die Durchschallungs- und Reflexionseigenschaften eines Prüfkörpers räumlich möglichst fein aufgelöst innerhalb des Prüfkörpervolumens zu ermitteln. Hierzu werden zur Vorgabe der Einschallrichtung sowie Fokustiefe die Zeitverzögerungen für die Sendetakte entsprechend eingestellt werden. Die empfangenen Ultraschallsignale der einzelnen Ultraschallwandler des Gruppenstrahlerprüfkopfes werden mit entsprechenden Phasenverzögerungen aufaddiert, so dass in einem Sendetakt ein Ultraschallsignal für einen bestimmten Einschallwinkel und ggf. einer bestimmten Fokustiefe entsteht, man spricht in diesem Fall von einem so genannten A-Bild. Das A-Bild repräsentiert das Ultraschallecho längs einer vorgegebenen "Blick- bzw. Schallausbreitungsrichtung" durch den Prüfkörper. Es kann als 1-dimensionales Schnittbild, in Art einer Schnittlinie durch den Prüfkörper angesehen werden, längs der Ultraschallechosignale räumlich aufgelöst angegeben sind. Wird der Prüfkörper unter verschiedenen Winkeln durchschallt, d.h. schwenkt man das Schallbündel im Prüfkörper, vorzugsweise innerhalb einer einheitlichen Schwenkebene, ist es möglich ein so genanntes Sektor-Bild zu rekonstruieren, das sich aus einer Vielzahl einzelner A-Bilder zusammensetzt.

Nachteilhaft bei der Anwendung des Phased-Array-Verfahrens zur zerstörungsfreien Materialuntersuchung an einem Prüfkörper ist jedoch der zeitliche und messtechnische Aufwand bis ein Prüfkörper möglichst vollständig untersucht ist, gilt es doch möglichst aus allen Volumenbereichen für eine vollständige Signalauswertung hinreichend zuverlässige Messsignale zu erhalten. So lassen sich in einem Messtakt oder einer Vielzahl einzelner Messtakte mit gleicher Phasenansteuerung der Ultraschallwandler lediglich Informationen über die Reflexionseigenschaften längs einer vorgegebenen Einschallrichtung des Prüfkörpers erhalten. Für eine Untersuchung des gesamten Prüfkörpervolumens ist daher eine sehr große Anzahl von Messungen mit jeweils unterschiedlichen Phasenansteuerungen erforderlich, was zu einem hohen Zeitaufwand für die gesamte Materialprüfung führt. So bedarf es einer arbeits- und zeitaufwendigen Umprogrammierung zum Einstellen eines neuen Einschallwinkels bzw. einer neuen Fokuslage.

Ein weiterer Nachteil ist darin zu sehen, dass ein vorgegebener Einschallwinkel die Prüfkopfapertur festlegt, d.h. die Apertur kann nicht für alle Einschallwinkel optimal gewählt werden, was die Auflösung der Messungen verschlechtert.

Gilt es mit den derzeit verfügbaren Ultraschallprüftechniken Kontrollen bezüglich der Fertigungsquälität an Industrieprodukten online, d.h. im Fertigungsprozess integriert, durchzuführen, so sollten die für die Qualitätsprüfung erforderlichen Maßnahmen keine den Fertigungsprozess behindernde oder verlangsamende Auswirkungen haben. Insbesondere die Herstellung von strangprofilartig ausgebildeten Werkstücken, wie Stahlknüppel, Stangen, Profile jeglicher Art, wie beispielsweise insbesondere Eisenbahnschienen, die in einem Strangpressverfahren hergestellt werden, erfordern zur Gewährleistung höchste Qualitätsanforderungen zuverlässig arbeitende Überprüfungsmethoden. Mit den bisher bekannten Ultraschallprüftechniken, wie eingangs erläutert, sind Online-Überwachungen an strangprofilartig ausgebildeten Werkstücken, die mit Fördergeschwindigkeiten von einigen Metern pro Sekunde längs Produktionslinien transportiert bzw. gefördert werden, zu träge sowie zu kosten- und geräteaufwändig. Auch bildgebende Rekonstruktionsverfahren, die auf der so genannten synthetischen Apertur-Technik basieren (Synthetic Aperture Focussing Technic - SAFT), d.h. alle an verschiedenen Messstellen des Prüfgegenstandes empfangenen Ultraschallsignale werden zurück ins Material projiziert, erfordern für die Messung und Bildrekonstruktion einen erheblichen Zeitaufwand, wodurch ihr Einsatz für eine Online-Überwachung unmöglich wird. Der erhebliche Zeitaufwand begründet sich in der Aufnahme der Ultraschallsignale mit einem sich bewegenden Ultraschallwandler und dem für die Bildrekonstruktion zeitintensiven Auswertevorgang der aufgenommenen Ultraschallzeitsignale.

Aus dem Dokument US6347551 ist ein Verfahren zur bildgebenden Ultraschallprüfung an Baumstämmen bekannt, bei dem mit einer Vielzahl von Ultraschallwandlern Ultraschallwellen in den Baumstamm eingekoppelt und innerhalb des Baumstammes reflektierte Ultraschallwellen von einer Vielzahl Ultraschallwandlern empfangen und in Ultraschallsignale umgewandelt werden, die der zerstörungsfreien bildgebenden Ultraschallprüfung zugrunde gelegt werden, mit folgenden Verfahrensschritten:
a) Vorsehen von n Ultraschallwandlern in räumlicher Verteilung um einen Baumstamm und Aktivieren eines ersten Ultraschallwandlers zur über ein Koppelmedium erfolgenden Einschallung eines ersten Ultraschallfeldes in den Baumstamm,
b) Empfangen der innerhalb des Baumstamms reflektierten Ultraschallwellen mit einer Vielzahl m in räumlicher Verteilung um den Baumstamm vorgesehenen Ultraschallwandlern und Generieren von m Ultraschallzeitsignalen, in denen zeitaufgelöst Amplitudeninformationen enthalten sind,
c) Abspeichern der m Ultraschallzeitsignale,
d) Aktivieren eines anderen Ultraschallwandlers und Durchführen der Verfahrensschritte b) und c), wobei das Aktivieren, das Empfangen und das Abspeichern einem Takt entspricht,
e) Wiederholtes Ausführen des Verfahrensschrittes d) mit jeweils der Auswahl eines weiteren Ultraschallwandlers, und
f) Rekonstruieren eines Volumen-, B- und/oder A-Bildes unter Nutzung abgespeicherter Ultraschallzeitsignale, die in einer Sequenz von mehreren Takten aufgenommen und abgespeichert werden, in deren Summe der Baumstamm von allen n Ultraschallwandlern aus beschallt wird.

Als weiterer Nachteil bei bisherigen Ultraschallprüftechniken unter Einsatz von Gruppenstrahlersystemen ist die Einschränkung der gegenseitigen Beabstandung der Ultraschallwandler zu nennen, der kleiner als die halbe Wellenlänge jener in den jeweiligen Prüfkörper einzukoppelnden Ultraschallwellen betragen sollte, um Scheinanzeigen bzw. Artefakte im rekonstruierten Ultraschallbild zu vermeiden.

### Darstellung der Erfindung

Der Erfindung liegt die Aufgabe zugrunde ein Verfahren zur bildgebenden Ultraschallprüfung an einem dreidimensionalen Werkstück, bei dem mit einem oder einer Vielzahl von Ultraschallwandlern Ultraschallwellen in das Werkstück eingekoppelt und innerhalb des Werkstückes reflektierte Ultraschallwellen von einer Vielzahl Ultraschallwellenwandlern empfangen und in Ultraschallsignale umgewandelt werden, die der zerstörungsfreien bildgebenden Ultraschallprüfung zugrunde gelegt werden, derart weiterzubilden, dass eine schnelle und online-fähige Überprüfung der Werkstücken, die vorzugsweise während ihres Fertigungsprozesses untersucht werden sollen, ermöglicht werden soll. Der hierfür erforderliche apparative, auswertetechnisch und letztlich kostenrelevante Aufwand soll möglichst gering gehalten und auf teure und unhandliche Sensorträger soll möglichst verzichtet werden. Überdies soll das lösungsgemäße Verfahren unabhängig von der Art der Ultraschallkoppelung in den Prüfkörper durchgeführt werden können.

Die Lösung der der Aufgabe zugrundeliegenden Aufgabe ist im Anspruch 1 angegeben. Das lösungsgemäße Verfahren vorteilhaft weiterbildende Merkmale sind Gegenstand der Unteransprüche sowie der Beschreibung insbesondere unter Bezugnahme auf die Ausführungsbeispiele entnehmbar.

Die technische Lösung beruht auf einem neuartigen, meßtechnischen Ansatz in Verbindung mit Algorithmen zur Rekonstruktion von Ultraschallbildern bei gleichzeitiger Unterdrückung von Artefakten bei im physikalisch-mechanischen Sinn unvollständigen Aperturen.

Das lösungsgemäße Verfahren sieht somit folgende Verfahrensschritte vor: Um ein zu untersuchendes Werkstück, das beispielsweise strang- oder stangenförming ausgebildet ist, bspw. ein Eisenbahnschienenstrang, werden in einer Querschnittsebene des Werkstückes n Ultraschallwandler vorzugsweise längs einer Linie angeordnet. Die Anordnung der Ultraschallwandler erfolgt vorzugsweise gleich verteilt um das Werkstück, d.h. mit jeweils gleichen Abständen zwischen zwei in Umfangsrichtung um das Werkstück unmittelbar benachbarten Ultraschallwandlern. In einer derartigen Meßkonstellation wird ein erster Ultraschallwandler oder eine erste Gruppe i von Ultraschallwandlern, die vorzugsweise benachbart zueinander angeordnet sind, zur Einschallung eines ersten Ultraschallfeldes bzw. von i Ultraschallfeldern in das Werkstück aktiviert. Im Falle der Aktivierung einer Gruppe i von Ultraschallwandlern gilt die Maßgabe, dass die Anzahl i kleiner gewählt ist als sämtliche n um das Werkstück herum vorgesehener Ultraschallwandler.

Im Unterschied zur Ultraschallwellenerzeugung steht für den Empfang der innerhalb des Werkstückes reflektierten oder das Werkstück durchsetzenden Ultraschallwellen eine Vielzahl m, vorzugsweise die gesamte Vielzahl n der räumlich um das Werkstück herum verteilt vorgesehenen Ultraschallwandler zur Verfügung. Somit werden die von wenigstens einem Ultraschallwandler in das Werkstück eingekoppelten Ultraschallwellen von einer Vielzahl, vorzugsweise von sämtlichen um das Werkstück herum angeordneten Ultraschallwandlern empfangen. Die von den Ultraschallwandlern detektierten Ultraschallzeitsignale, in denen zeitaufgelöst Amplitudeninformationen enthalten sind, werden entsprechend für eine nachfolgende rekonstruktive Verarbeitung abgespeichert oder sofort einer Auswertung zugeführt, in der durch Rekonstruktion ein 2-dimensionales Ultraschallbild, d.h. B-Bild, oder ein A-Bild in Form eines eindimensionalen, längs eines vorgebbaren Einschallwinkels zeit- und ortsaufgelösten Ultraschallechosignals, ausschließlich unter Verwendung der abgespeicherten bzw. bereitgestellten Ultraschallsignale ermittelt wird.

Da sich die Empfangsaperturen der um das Werkstück herum angeordneten Ultraschallwandler überlappen, dies gilt zumindest für die Empfangsaperturen zweier unmittelbar benachbart zueinander angeordneter Ultraschallwandler, kann der zentrale Volumenbereich des Werkstückes vollständig erfasst werden. In diesem Zusammenhang wird von einer so genannte geschlossenen Apertur gesprochen, die es gewährleistet, dass sämtliche aus dem Werkstück austretenden Ultraschallwellen, sei es nach erfolgter Reflexion an im Werkstück vorhandenen Materialungänzen oder nach ungestörtem Hindurchtreten durch das Werkstück, aus unterschiedlichen Raumrichtungen detektiert werden können.

Grundsätzlich ist es möglich ausreichend viel Informationen aus den im Rahmen nur eines einzigen Messtaktes gewonnenen Ultraschallechos zu erhalten, d.h. bei einmaliger Aktivierung eines Ultraschallwandlers oder einer Gruppe i von Ultraschallwandlern und Empfang der Ultraschallechos, um ein B-Bildes oder ein A-Bild zu generieren. Je nach Art des zu untersuchenden Werkstückes und der gestellten Messaufgabe sowie der geforderten Aufnahmequalität und Bildauflösung ist es vorteilhaft das Werkstück in mehreren Messtakten aus unterschiedlichen Raumrichtungen, von jeweils unterschiedlich positionierten Ultraschallwandlern oder unterschiedlich positionierter Gruppen i von Ultraschallwandlern zu beschallen. In jedem der Messtakte dienen jedoch vorzugsweise sämtliche um das Werkstück herum gruppierten Ultraschallwandler als Empfänger. Auf dieser Weise werden möglicherweise innerhalb des Werkstückes enthaltene Materialungänzen taktweise von Ultraschallwellenfelder aus unterschiedlichen Raumrichtungen beschallt, deren jeweilige reflektierten Ultraschallwellen von sämtlichen Ultraschallwandlern unter Berücksichtigung der jeweiligen Ultraschalllaufzeiten sowie Amplitudeninformationen detektiert und entsprechend abgespeichert werden. Auf der Grundlage der abgespeicherten Ultraschalllaufzeitsignale werden mit Hilfe spezieller Rekonstruktionsmodule bzw. -techniken B-Bilder für die jeweilige Prüfposition des zu untersuchenden Werkstückes relativ zu der Ultraschallwellenanordnung ermittelt. Die bei der Rekonstruktion zugrundeliegende Hauptidee besteht somit in der Berücksichtigung der Ultraschalllaufzeiten von jedem einzelnen Ultraschallsender zu einem bestimmten Raumpunkt innerhalb des zu untersuchenden Werkstückes und zurück zu jedem einzelnen Ultraschallempfänger. Durch eine derartige laufzeitbezogene Rekonstruktion kann das Volumen des zu untersuchenden Werkstückes in eine Vielzahl einzelner kleiner Volumenbereiche, sogenannte Voxel, unterteilt werden, zu denen jeweils Ultraschallechosignale im Sinne von Amplituden- und Laufzeitinformation zugeordnet werden, insofern ergibt sich aufgrund der laufzeitbezogenen Rekonstruktion ein Fokussierungseffekt, wobei der Fokuspunkt in jedem einzelnen Voxel des zu untersuchenden Werkstückvolumens liegt. Aufgrund der räumlichen Gleichverteilung aller für das Aussenden und den Empfang von Ultraschallwellen vorgesehenen Ultraschallwandlern längs einer linearen Anordnung um das zu untersuchende Werkstück, liegt somit die Vielzahl der einzelnen Voxel, zu denen entsprechende Ultraschalllaüfzeitsignale zugeordnet werden können, bevorzugt in einer zweidimensionalen Schnittebene durch das Werkstück. Aufgrund der Unmittelbarkeit der von den Ultraschallwandlern erfassten Ultraschallzeitsignale sowie der auswertetechnisch schnellen Zuordnung einzelner Zeit- und Amplitudeninformationen zu den einzelnen Voxeln ist es möglich, ein Sektorbild bzw. B-Bild durch ein Werkstück online zu erhalten. Hierbei werden die den einzelnen Voxeln zuordenbaren Ultraschallinformationen auf einer die durchschallte Schnittebene durch das Werkstück repräsentierenden Bildebene zur Darstellung gebracht, bspw. durch numerische Zahlenangaben oder mittels Farbkodierung, so dass auch eine visuelle Bewertung der online erhaltenen Ultraschallsignale möglich ist.

Für eine verbesserte Schnittbilderstellung bzw. eine von allen Raumseiten beschallte Materialungänze wird eine Vielzahl einzelner Messtakte in zeitlich kurzer Abfolge durchgeführt, bei denen sämtliche um das Werkstück verteilt angeordnete Ultraschallsender jeweils als Sender dienen. Die in jedem einzelnen Messtakt gewonnenen Schnittbilder oder A-Bilder werden in Zusammenschau gebracht, um und auf diese Weise eine möglichst vollständige Betrachtungsweise möglicher innerhalb des Werkstückes enthaltenen Materialungänzen zu erhalten.

Die mit dem lösungsgemäßen Verfahren erzielbare hohe Mess- und Auswertegeschwindigkeit erlaubt es überdies längs einer Produktionslinie sich mit Fördergeschwindigkeiten von einigen m/sec, bspw. von bis zu 10m/sec fortbewegende Werkstücke mit dem vorstehend beschriebenen Messmodus zu durchschallen, d.h. die Werkstücke werden von allen Ultraschallwandlern in einzelnen aufeinander folgenden Messtakten durchschallt, um aussagekräftige Schnittbilder zu verhalten, anhand denen die Werkstückqualität beurteilt werden kann.

Werden aufgrund der Eigenbewegung des zu untersuchenden Werkstückes mehrere Schnittbilder in sequentieller Abfolge angefertigt, so ist es möglich durch eine Zusammenschau von einer Vielzahl einzelner in Längsrichtung von einem Werkstück aufgenommenen Schnittbildern eine 3D-Rekonstruktion von dem vollständigen Werkstück durch entsprechende Interpolation zwischen den einzelnen B-Bildern herzustellen.

Das lösungsgemäße Verfahren soll desweiteren unter Bezugnahme auf konkrete Ausführungsbeispiele näher beschrieben werden.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1a bis d: Sequenzbilddarstellungen für die Durchführung von vier aufeinanderfolgenden Meßtakten, sowie
- Fig. 2: schematisierte Anordnung einer Ultraschallwandleranordnung innerhalb eines Wasserbades.

### Wege zur Ausführung der Erfindung, gewerbliche Verwendbarkeit

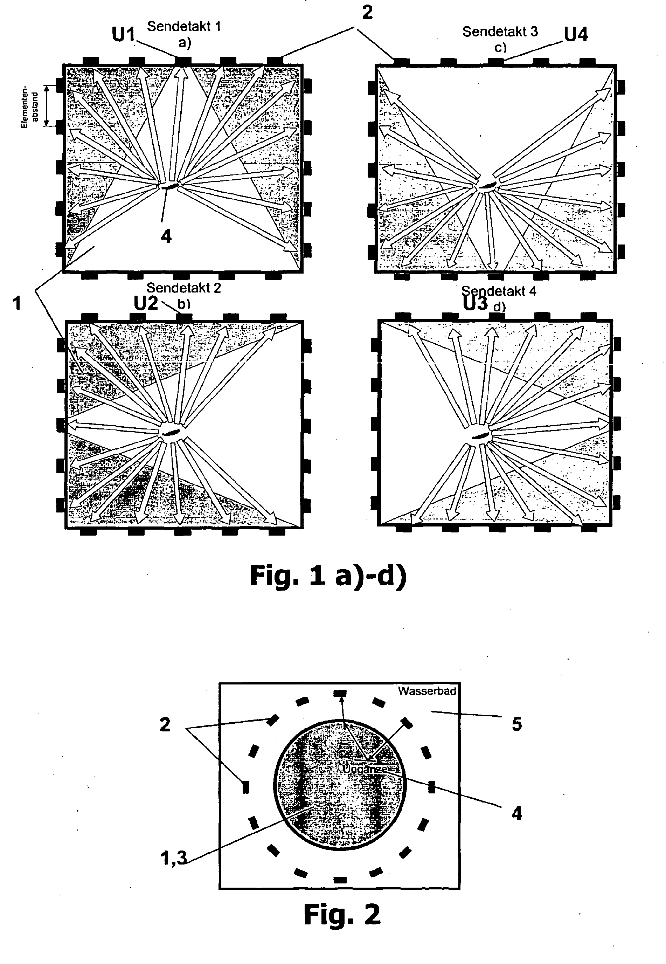

Zur bildlichen Erläuterung des lösungsgemäßen Verfahrens seien auf die Sendetakte 1 bis 4 gemäß Bilddarstellungen in Figur 1a bis d hingewiesen. Es sei angenommen, dass die gleich verteilt um die Seitenkanten eines länglich ausgebildeten Werkstückes 1 angeordneten Ultraschallwandler 2 als Gruppenstrahlersystem aufgebaut sind, d.h. die Vielzahl einzelner Ultraschallwandler können einzeln zeitverzögert aktiviert werden, was die Grundlage für den Sende- und Empfangsbetrieb nach der Sampling Phased-Array-Technik ist. Die Längserstreckung des Werkstückes 1, das beispielsweise in Art Stahlstranges ausgebildet ist mit einem quadratischen Querschnitt, ist senkrecht zur Zeichenebene der Figur 1 orientiert.

In einem in Figur 1a dargestellten ersten Sendetakt wird nun ein erster Ultraschallwandler U1 aktiviert, dessen Sendeapertur eine kegelförmig divergente Form aufweist. Die an der im Inneren des Werkstückes 1 vorgesehenen Materialungänze 4 reflektierten Ultraschallwellen werden von allen um das Werkstück 1 angeordneten Ultraschallwandlern 2 empfangen. In einem darauffolgenden Sendetakt 2 wird ein um 90° versetzt angeordneter Ultraschallwandler U2 aktiviert, wobei die Reflexionssignale gleichfalls von allen übrigen Ultraschallwandlern 2 empfangen werden. Das gleiche gilt für die darauffolgenden Sendetakte 3 und 4, in denen jeweils einzelne um 90° versetzt angeordnete Ultraschallwandler U3, U4 entsprechend aktiviert werden. Nach Durchführung der in Figur 1a bis d dargestellten vier Sendetakte ist die im Inneren des Werkstückes 1 vorgesehene Materialungänze 4 von allen Raumrichtungen beschallt worden, so dass Form und Größe der Materialungänze durch die Zusammenschau und Auswertung der einzelnen Ultraschallsequenzbilder exakt ermittelbar sind. Wesentlich ist jedoch, dass durch die lösungsgemäße Anordnung der Ultraschallwandler relativ zum Werkstück 1 sowie deren entsprechende taktweise Aktivierung eine 100 %ige Abdeckung des inneren Prüfbereiches 3 innerhalb des Werkstückes 1 gewährleistet ist, wobei Materialungänzen innerhalb des Werkstückes mit beliebiger Orientierung nachgewiesen werden können.

Die längs des zu untersuchenden Werkstückes vorzusehenden Ultraschallwandler hinsichtlich Anzahl und Größe ergibt sich aus den jeweils geforderten Fehlernachweisgrenzen sowie der Raumgeometrie des zu untersuchenden Werkstückes. Auch ist es möglich, das lösungsgemäße Verfahren durch Vorsehen geeigneter Koppelmedien zwischen den einzelnen Ultraschallwandlern und dem zu untersuchenden Werkstück einzusetzen, so beispielsweise innerhalb eines Wasserbades 5, das in Figur 2 dargestellt ist. Hier sind die einzelnen Ultraschallwandler 2 zirkular, d.h. kreisförmig beabstandet um ein im Querschnitt kreisrundes Werkstück 1 angeordnet. Zur Schalleinkopplung befinden sich die Ultraschallwandler sowie auch das Werkstück 1 in einem Wasserbad 5.

Bezüglich des lösungsgemäßen Verfahrens können letztlich folgende Vorteile gegenüber konventionellen Ultraschalleinkoppeltechniken genannt werden:
- Das getaktete Gruppenstrahlerprinzip ermöglicht die Rekonstruktion des kompletten B- Bildes an der jeweiligen Prüfposition. Dabei kann das gesamte Prüfvolumen 100%-ig abgedeckt werden.
- Bei geschlossener Apertur des getakteten Gruppenstrahlers wird der Nachweis von beliebig orientierten Materialungänzen gewährleistet.
- Durch spezielle Rekonstruktionsalgorithmen erreicht man eine Rekonstruktion in Echtzeit und eine quantitative Auswertung von 2D-Abbildungen bei Prüfgeschwindigkeiten, mit sich denen das Prüfobjekt bewegt, bis zu einigen Metern pro Sekunde.
- Durch die automatische Fokussierung in jedem Punkt der Ultraschallabbildung verbessern sich die prüftechnischen Charakteristiken wie Prüfempfindlichkeit und Auflösungsvermögen.
- Durch den Einsatz der synthetischen Fokussierung unterdrückt man bei großen Elementabständen (> λ/2) die Hauptkeulen höherer Ordnung in der Richtcharakteristik des Gruppenstrahlers. Damit ist es möglich, eine quasi geschlossene Apertur mit einer kleinen Anzahl von Gruppenstrahlerelementen zu bekommen.
- Durch eine optimierte Prüfkopfanordnung ist man in der Lage, die geforderte Prüfempfindlichkeit für das vollständige Prüfvolumen mit minimalem Materialaufwand (Anzahl der Arrayelemente und Elektronikkanäle) zu erreichen.
- Die Kombination von elektronischer und mechanischer Abtastung des Prüfobjektes ergibt die Möglichkeit zur dreidimensionalen Rekonstruktion des Prüfvolumens.
- Durch den Einsatz des getakteten Gruppenstrahlers ist es möglich, Objekte mit beliebig komplizierter Geometrie zu prüfen. Aus den gespeicherten Zeitsignalen kann man die Oberflächenkontur rekonstruieren und auf Grund der gewonnenen Profilinformation die Rekonstruktion des Prüfvolumens unter Berücksichtigung der Brechungsgesetze durchführen.

### Bezugszeichenliste

- 1: Werkstück
- 2: Ultraschallwandler
- 3: Prüfbereich
- 4: Materialungänze
- 5: Wasserbad

## Patentansprüche

1. Verfahren zur bildgebenden Ultraschallprüfung an einem dreidimensionalen Werkstück, bei dem mit einem oder einer Vielzahl von Ultraschallwandlern Ultraschallwellen in das Werkstück eingekoppelt und innerhalb des Werkstückes reflektierte Ultraschallwellen von einer Vielzahl Ultraschallwandlern empfangen und in Ultraschallsignale umgewandelt werden, die der zerstörungsfreien bildgebenden Ultraschallprüfung zugrunde gelegt werden, **gekennzeichnet durch** folgende Verfahrensschritte:
a) Vorsehen von n Ultraschallwandlern (2) in räumlicher Verteilung um ein sich längs einer Produktionslinie fortbewegendes, stangenförmiges Werkstück (1) und Aktivieren eines ersten oder einer ersten Gruppe i, mit i < n von Ultraschallwandlern zur kontaktfreien oder über ein Koppelmedium in das Werkstück erfolgenden Einschallung eines ersten Ultraschallfeldes oder von ersten i Ultraschallfeldern in das Werkstück,
b) Empfangen der innerhalb des Werkstückes reflektierten Ultraschallwellen mit einer Vielzahl m in räumlicher Verteilung um das Werkstück vorgesehenen Ultraschallwandlern, deren Empfangsaperturen sich paarweise, zwischen zwei benachbart angeordneten Ultraschallwandler jeweils gegenseitig räumlich zumindest teilweise überlappen, und Generieren von m Ultraschallzeitsignalen, in denen zeitaufgelöst Amplitudeninformationen derart enthalten sind, dass die von den einzelnen Ultraschallwandlern empfangenen Ultraschallzeitsignale unter Berücksichtigung jeweils einer Laufzeit zwischen dem Aussendezeitpunkt und dem Empfangszeitpunkt an jedem der einzelnen Ultraschallwandlern derart erfasst werden, dass das Volumen des Werkstückes in einzelne Raumpunkte, in so genannte Voxel unterteilt wird, zu denen jeweils wenigstens ein Teil des Ultraschallechosignals im Sinne von Amplituden- und Laufzeitinformation zugeordnet wird,
c) Abspeichern der m Ultraschallzeitsignale,
d) Aktivieren eines anderen Ultraschallwandlers oder einer anderen Gruppe i Ultraschallwandler, die sich **durch** wenigstens einen Ultraschallwandler von der ersten Gruppe unterscheidet und Durchführen der Verfahrensschritte b) und c), wobei das Aktivieren, das Empfangen und das Abspeichern einem Takt entspricht,
e) Wiederholtes Ausführen des Verfahrensschrittes d) mit jeweils der Auswahl eines weiteren Ultraschallwandlers oder einer weiteren Gruppe von i Ultraschallwandlern unter der Maßgabe, dass sich der weitere Ultraschallwandler oder die weitere Gruppe mit i Ultraschallwandlern von einem bereits ausgewählten Ultraschallwandler oder von einer bereits ausgewählten Gruppe mit i Ultraschallwandlern unterscheidet, und
f) Rekonstruieren eines Volumen-, B- und/oder A-Bildes unter Nutzung abgespeicherter Ultraschallzeitsignale, die in einer Sequenz von mehreren Takten aufgenommen und abgespeichert werden, in deren Summe das Werkstück von allen n Ultraschallwandlern aus beschallt wird, indem zu einzelnen Voxeln die jeweils zuordenbare Amplituden- und Laufzeitinformation ausgewählt werden.

2. Verfahren nach Anspruch 1,
**dadurch gekennzeichnet, dass** die Einschallung des Ultraschallwellenfeldes oder der i Ultraschallwellenfelder taktweise erfolgt, und dass pro Takt die Einschallung jeweils aus einer unterschiedlichen Raumrichtung erfolgt.

3. Verfahren nach Anspruch 2,
**dadurch gekennzeichnet, dass** der Unterschied der Raumrichtungen, aus denen pro Takt eine Einschallung auf das Werkstück erfolgt, zwischen zwei zeitlich aufeinander folgende Einschallungen möglichst groß ist.

4. Verfahren nach einem der Ansprüche 1 bis 3,
**dadurch gekennzeichnet, dass** das Vorsehen von n Ultraschallwandlern in weitgehender räumlicher Gleichverteilung längs einer Linearanordnung um das Werkstück erfolgt.

5. Verfahren nach einem der Ansprüche 1 bis 4,
**dadurch gekennzeichnet, dass** das taktweise Einschallen der Ultraschallwellen von maximal n Ultraschallwandlern in das Werkstück innerhalb einer Zeitspanne durchgeführt wird, in der das sich in Längsrichtung bewegende Werkstück quasi als stationär angesehen wird.

6. Verfahren nach einem der Ansprüche 1 bis 5,
**dadurch gekennzeichnet, dass** die n Ultraschallwandler in einer linearen Anordnung angeordnet werden, in der die Ultraschallwandler einen gegenseitigen Abstand aufweisen, der größer ist als die Hälfte der Ultraschallwellenlänge.

7. Verfahren nach einem der Ansprüche 1 bis 6,
**dadurch gekennzeichnet, dass** die Ultraschalleinkopplung mittels Tauchtechnik erfolgt.

8. Verfahren nach einem der Ansprüche 1 bis 7,
**dadurch gekennzeichnet, dass** die Ultraschallwandler sowohl Ultraschallwellen aussenden als auch empfangen und n= m ist.

9. Verfahren nach einem der Ansprüche 1 bis 8,
**dadurch gekennzeichnet, dass** zur Ermittlung eines Volumenbildes mehrere B Bilder erstellt werden, die schichtartig zusammengefügt werden.

## Claims

1. A method for imaging ultrasonic testing on a three-dimensional workpiece, in which ultrasonic waves are coupled into the workpiece using one or a plurality of ultrasonic transducers and ultrasonic waves reflected inside the workpiece are received by a plurality of ultrasonic receivers and converted into ultrasonic signals, which are used as the basis of nondestructive imaging ultrasonic testing, **characterized by** the following method steps:
a) providing n ultrasonic transducers (2) in spatial distribution around a bar-shaped workpiece (1) advancing along a production line and activating a first one or a first group i, with i < n, of ultrasonic transducers for the contactless acoustic irradiation or acoustic irradiation via a coupling medium into the workpiece of a first ultrasonic field or first i ultrasonic fields into the workpiece,
b) receiving the ultrasonic waves reflected inside the workpiece using a plurality m of ultrasonic transducers provided in spatial distribution around the workpiece, whose receiving apertures at least partially mutually overlap spatially in pairs between two adjacent ultrasonic transducers, and generating m ultrasonic time signals, in which time-resolved amplitude information is contained so that the ultrasonic time signals received by the individual ultrasonic transducers are detected at each of the individual ultrasonic transducers with consideration of a run time between the transmitting moment and the receiving moment in each case so that the volume of the workpiece is divided into individual spatial points, i.e., so-called voxels, with each of which at least a part of the ultrasonic echo signal is associated in the meaning of amplitude and runtime information,
c) storing the m ultrasonic time signals,
d) activating another ultrasonic transducer or another group i of ultrasonic transducers, which differs from the first group by at least one ultrasonic transducer, and performing method steps b) and c), activation, receiving, and storage corresponding to one cycle,
e) repeatedly executing method step d) with the selection of a further ultrasonic transducer or a further group of i ultrasonic transducers in each case with the proviso that the further ultrasonic transducer or the further group having i ultrasonic transducers differs from an already selected ultrasonic transducer or from an already selected group having i ultrasonic transducers, and
f) reconstructing a volume, B image, and/or A image while using stored ultrasonic time signals, which were recorded and stored in a sequence of multiple cycles, in whose sum the workpiece is acoustically irradiated by all n ultrasonic transducers, in that the particular amplitude and runtime information which can be associated with the individual voxels is selected.

2. The method according to Claim 1,
**characterized in that** the acoustic irradiation of the ultrasonic wave field or the i ultrasonic wave fields is performed in cycles, and the acoustic irradiation occurs from a different spatial direction in each cycle.

3. The method according to Claim 2,
**characterized in that** the difference of the spatial directions from which acoustic irradiation is performed on the workpiece per cycle is as great as possible between two chronologically sequential acoustic irradiations.

4. The method according to one of Claims 1 through 3,
**characterized in that** the provision of n ultrasonic transducers is performed in substantial spatial equipartition along a linear configuration around the workpiece.

5. The method according to one of Claims 1 through 4,
**characterized in that** the cyclic acoustic irradiation of the ultrasonic waves is performed by at most n ultrasonic transducers in the workpiece within a time span in which the workpiece, which is moving in a longitudinal direction, is viewed as quasi-stationary.

6. The method according to one of Claims 1 through 5,
**characterized in that** the n ultrasonic transducers are situated in a linear configuration, in which the ultrasonic transducers have a mutual spacing which is greater than half of the ultrasonic wavelength.

7. The method according to one of Claims 1 through 6,
**characterized in that** the ultrasonic coupling is performed using immersion technology.

8. The method according to one of Claims 1 through 7,
**characterized in that** the ultrasonic transducers both emit and also receive ultrasonic waves and n = m.

9. The method according to one of Claims 1 through 8,
**characterized in that** multiple B images, which are assembled in layers, are prepared to ascertain one volume image.

## Revendications

1. Procédé de contrôle à ultrasons générateur d'images sur une pièce usinée tridimensionnelle, dans lequel des ondes ultrasonores sont introduites dans la pièce usinée à l'aide d'un ou d'une multitude de convertisseurs à ultrasons et les ondes ultrasonores réfléchies dans la pièce usinée sont reçues par une multitude de convertisseurs à ultrasons et converties en signaux ultrasonores qui sont pris comme base du contrôle non destructif à ultrasons générateur d'images, **caractérisé par** les étapes opératoires suivantes :
a) mise en place de n convertisseurs à ultrasons (2) répartis dans l'espace autour d'une pièce usinée (1) en forme de barre se déplaçant le long d'une ligne de production et activation d'un premier ou d'un premier groupe i, sachant que i < n, de convertisseurs à ultrasons pour le balayage sans contact ou se faisant via un moyen de couplage dans la pièce usinée d'un premier champ ultrasonores ou de i premiers champs ultrasonores dans la pièce usinée,
b) réception des ondes ultrasonores réfléchies dans la pièce usinée à l'aide d'une multitude de convertisseurs à ultrasons prévus répartis dans l'espace autour de la pièce usinée et dont les ouvertures de réception se chevauchent respectivement réciproquement du moins en partie par paires entre deux convertisseurs à ultrasons disposés à proximité l'un de l'autre et génération de m signaux temporels ultrasonores dans lesquels sont contenues des informations d'amplitude à résolution temporelle telles que les signaux temporels ultrasonores reçus par les convertisseurs à ultrasons individuels sont détectés en tenant compte respectivement d'un temps de fonctionnement entre le moment d'émission et le moment de réception sur chacun des convertisseurs à ultrasons individuels de manière à ce que le volume de la pièce usinée soit divisé à des points spatiaux individuels en ce qu'on appelle des voxels auxquels au moins respectivement une partie du signal d'écho ultrasonores est associé dans le sens d'une information d'amplitude et de temps de fonctionnement.
c) enregistrement des m signaux temporels ultrasonores,
d) activation d'un autre convertisseur à ultrasons ou d'un autre groupe de i convertisseurs à ultrasons qui se distingue du premier groupe par au moins un convertisseur à ultrasons et réalisation des étapes opératoires b) et c), l'activation, la réception et l'enregistrement correspondant à une impulsion,
e) réalisation répétée de l'étape opératoire d) avec respectivement la sélection d'un autre convertisseur à ultrasons ou d'un autre groupe de i convertisseurs à ultrasons sous réserve que l'autre convertisseur à ultrasons ou l'autre groupe comprenant i convertisseurs à ultrasons se distingue d'un convertisseur à ultrasons déjà sélectionné ou d'un groupe déjà sélectionné comprenant i convertisseurs à ultrasons, et
f) reconstitution d'une image en volume B et/ou A en utilisant les signaux temporels ultrasonores enregistrés qui sont reçus et enregistrés dans une séquence de plusieurs impulsions dans la somme desquelles la pièce usinée est balayée par la totalité des n convertisseurs à ultrasons en sélectionnant pour les voxels individuels l'information d'amplitude et de temps de fonctionnement qui peut respectivement y être associée.

2. Procédé selon la revendication 1,
**caractérisé en ce que** le balayage du champ d'ondes ultrasonores ou des i champs d'ondes ultrasonores se fait par impulsions et que le balayage se fait respectivement par impulsions depuis un sens spatial différent.

3. Procédé selon la revendication 2,
**caractérisé en ce que** la différence entre les sens spatiaux depuis lesquels un balayage se fait par impulsion sur la pièce usinée est aussi élevée que possible entre deux balayages se succédant dans le temps.

4. Procédé selon une des revendications 1 à 3,
**caractérisé en ce que** la mise en place de n convertisseurs à ultrasons a lieu suivant une répartition spatiale en grande partie identique en suivant une disposition linéaire autour de la pièce usinée.

5. Procédé selon une des revendications 1 à 4,
**caractérisé en ce que** le balayage par impulsions des ondes ultrasonores au maximum de n convertisseurs à ultrasons dans la pièce usinée est réalisé pendant une fourchette de temps pendant laquelle la pièce usinée se déplaçant dans le sens longitudinal est considérée quasiment comme stationnaire.

6. Procédé selon une des revendications 1 à 5,
**caractérisé en ce que** les n convertisseurs à ultrasons sont disposés suivant un agencement linéaire dans lequel les convertisseurs à ultrasons sont placés à une distance mutuelle qui est supérieure à la moitié de la longueur des ondes ultrasonores.

7. Procédé selon une des revendications 1 à 6,
**caractérisé en ce que**
l'introduction des ultrasons se fait par technique de plongée.

8. Procédé selon une des revendications 1 à 7,
**caractérisé en ce que** les convertisseurs à ultrasons aussi bien émettent que reçoivent des ondes ultrasonores et que n = m.

9. Procédé selon une des revendications 1 à 8,
**caractérisé en ce que**,
pour déterminer une image en volume, plusieurs images B qui sont assemblées par strates sont établies.
